# EUROPEAN PATENT SPECIFICATION

(11) **EP 3 944 477 B1**
(45) Date of publication and mention of the grant of the patent: **18.09.2024**
(21) Application number: 20187148.0
(22) Date of filing: 22.07.2020
(51) Int. Cl.: H02K 11/33, H02K 5/22, H01R 4/30, H02K 11/05, H02K 5/20, H02K 9/19, H01R 11/09, H02K 9/197

(54) **INVERTER AND ELECTRIC MOTOR HAVING SUCH AN INVERTER**
WECHSELRICHTER UND ELEKTROMOTOR MIT EINEM SOLCHEN WECHSELRICHTER
ONDULEUR ET MOTEUR ÉLECTRIQUE ÉQUIPÉ D'UN TEL ONDULEUR

(43) Date of publication of application: 26.01.2022
(73) Proprietor: Mahle International GmbH, 70376 Stuttgart (DE)
(72) Inventor: AHEC, Ziga, 1290 Grosuplje (SI); BABIC, Gregor, 1312 Videm-Dobrepolje (SI); VERDEV, Luka, 3320 Velenje (SI)
(74) Representative: BRP Renaud & Partner mbB Rechtsanwälte Patentanwälte Steuerberater

(56) References cited:
- EP-A1- 3 609 068
- EP-A2- 2 685 796
- EP-A2- 2 897 274
- US-A1- 2004 022 041

## Description

The invention relates to an inverter for an electric motor according to the preamble of Claim 1. The invention also relates to an electric motor having the inverter.

An electric motor having an inverter is known for example from US 2016/065030 A1, US 2008/284272 A1 and JP 2016146702 A. The electric motor comprises a rotor and a stator which electromagnetically interact with one another. Usually, the inverter comprises a capacitor board with capacitors, a transistor board with transistors and a control circuit board and converts the direct current into the three-phase current for the stator. In order to feed the direct current into the inverter, the same usually comprises battery terminals assigned to the positive pole and the negative pole. The design of the battery terminals is often highly complex as a result of which the manufacturing costs and the assembly expenditure are increased. US 2004/0022041 A1, EP 2 897 274 A2, EP 2 685 796 A2, EP 3 609 068 A1 disclose battery terminals of a simple design. The battery terminals are here formed as one piece formed from electric conductive material.

The object of the invention therefore is to state an improved or at least alternative embodiment for an inverter of the generic type, with which the described disadvantages are overcome. The object of the invention also is to provide an electric motor having such an inverter.

According to the invention, these objects are solved through the subject of the independent claims. Advantageous embodiments are subject of the dependent claims.

An inverter is provided for an electric motor. The inverter comprises a capacitor board having multiple capacitors, multiple transistor boards each with multiple transistors and a control circuit board. The capacitor board, the respective transistor boards and the control circuit board lie axially on top of one another and are electrically interconnected with one another. For the negative pole and for the positive pole, the inverter comprises a battery terminal each which are connected to the capacitor board in an electrically conductive manner and axially project from the capacitor board. Advantageously, the battery terminals can be screwed to the capacitor board. According to the invention, the battery terminals are identical to one another and are each formed by a connector having an external dielectric casing and internal electrically conductive lines. The battery terminals according to the invention are advantageously of a simple design and because of this the manufacturing expenditure and the assembly expenditure of the battery terminals in the inverter reduced.

The terms "axial" and "radial" in connection with the present invention relate to a longitudinal centre axis of the inverter. The capacitor board, the control circuit board and the transistor boards orientated in the inverter perpendicularly to the longitudinal centre axis. The transistors are primarily MOSFET.

According to the invention, the capacitors are arranged annularly on the capacitor board. The battery terminals are then arranged between the capacitors and centrally on the capacitor board. According to the invention, the respective battery terminal comprises three pole contact for contacting to the capacitor board, wherein the pole contacts of the one battery terminal and the pole contacts of the other battery terminal are arranged in a circle on the capacitor board and alternately arranging one another in the circle. Advantageously, the pole contacts of the battery terminals can be arranged symmetrically in the centre of the capacitor board. Through the symmetry created on the capacitor board, negative effects and losses in the inverter can be minimised.

Advantageously, the respective battery terminal can comprise a bridge that is parallel to the capacitor board, which connects the central pole contact with a lateral pole contact in an electrically conductive manner. The respective battery terminal can additionally comprise a second bridge that is parallel to the capacitor board, which connects the central pole contact with the other lateral pole contact in an electrically conductive manner. The first bridge and the second bridge are axially offset to one another and orientated at an angle to one another. Advantageously, the first bridge of the one battery terminal in each case can bridge the second bridge of the other battery terminal, so that the pole contacts of the one battery terminal and the pole contacts of the other battery terminal are arranged in a circle and alternating one another in the circle. Because of this, the pole contacts of the negative pole and the pole contacts of the positive pole are also arranged alternately and in a circle. Through the created symmetry on the capacitor board, negative effects and losses in the inverter can be minimised.

Advantageously it can be provided that on one of the pole contacts of the respective battery terminal a contact connector is formed, which axially projects from the capacitor board and leads to the outside. By way of the contact connector, the pole contacts of the respective battery terminal are contactable towards the outside in an electrically conductive manner.

In an advantageous embodiment of the inverter it can be provided that the inverter comprises a hollow-cylindrical carrier with a centre axis. Then, the carrier carries the capacitor board, the transistor boards and the control circuit board and encases these in the circumferential direction towards the outside. In the carrier, an annular rear ring that is orientated transversely to the centre axis is additionally integrally formed. The carrier ring is formed annularly, so that an opening located in the centre is formed in the carrier ring. Advantageously it can be provided that the battery terminals project through the opening of the annular carrier ring to the outside. By way of this, the inverter is designed in a particularly compact manner. The term "carry" in the context with the present invention means that the capacitor board, the transistor boards and the control circuit board are aligned in the right position to each other via the carrier. A pressure plate is firmly connected to a cooling plate, so that an elastically deformable foam pad, the capacitor board, the carrier ring, and the transistor boards are pressed together i.e. are sandwiched between the pressure plate and the cooling plate. The inverter forms a contiguous assembly unit with the carrier, the capacitor board, the transistor boards, the cooling plate and the control circuit board ready for assembly. By way of this, the inverter can be finish-assembled independently of further elements of the electric motor. Because of this, both the effort and also the costs can be reduced. In addition, the inverter can be tested for its functionality even prior to the assembly on further elements of the electric motor.

The carrier is preferentially formed from plastic and not electrically conductive. The carrier protects the capacitor board, the transistor boards and the control circuit board towards the outside and aligns the same relative to one another. The capacitor board, the transistor boards and the control circuit board are arranged in the carrier sandwich-like on top of one another and axially spaced apart from one another, wherein the capacitor board is preferentially arranged between the control circuit board and the transistor boards. The centre axis of the carrier coincides with the longitudinal centre axis of the inverter, so that accordingly the capacitor board, the transistor boards and the control circuit board are arranged perpendicularly to the centre axis.

In addition it can be provided that the transistor boards are fastened on the annular carrier ring, facing away from the capacitor board and circulating about the centre axis in a distributed and clamping manner. The carrier ring divides an interior space of the carrier into two axially adjacent regions, wherein in the first region the transistor boards and in the second axial region the capacitor board and the control circuit board are received and fixed. In other words, the capacitor board and the transistor boards are separated from one another and electrically insulated by the carrier ring.

Advantageously, multiple slots can be formed in the carrier ring in which a contact bus bar each is received. The respective contact bus bar is then compressed between the respective transistor board and the capacitor board and because of this the transistor boards are electrically contacted with the capacitor board. By way of the foam board and the pressure plate, the respective contact bus bar is securely fixed between the capacitor board and the respective transistor board. By way of the foam pad, an adequately high pressure force can be generated between the respective transistor board and the capacitor board. Practically, the contact bus bar comprises electrically conductive paths or is completely formed from an electrically conductive material.

For fixing the transistor boards on the support ring it can be provided that on the support ring at least one undercut fixing element and at least one clip for the respective transistor board are formed. The respective transistor board is then fastened on the carrier ring in a clamping manner by means of the at least one fixing element and the at least one clip. Practically, the at least one fixing element and the at least one clip are arranged located opposite one another or the at least one fixing element is assigned to a side and the at least one clip to a side of the respective transistor board located opposite. Then, the respective transistor board can be guided under the at least one fixing element and clipped onto the carrier ring by way of the at least one clip. Preferentially, two fixing elements and two clips for the respective transistor board are formed on the carrier ring so that a tilting of the respective transistor board on the carrier ring is prevented.

Advantageously it can be provided that multiple contact pins are cast into the carrier ring of the carrier. The contact pins are orientated axially from the transistor boards to the control circuit board and arranged circulating about the centre axis. The respective transistor board is electrically contacted with the respective assigned contact pin via an electrically conductive wire, which is wire bonded to the respective transistor board and to the respective contact pin. Further, the respective contact pin has a thickened portion on the end side in each case towards the control circuit board and the control circuit board comprises a receiving opening for the respective thickened portion. The respective thickened portion engages in the respective receiving opening and by way of this the contact pin is fastened in the control circuit board in a clamping manner and electrically contacted with the control circuit board.

Practically, the carrier and thus the carrier ring are formed from plastic and not electrically conductive. For example, the respective contact pin can be metallic. It is to be understood that at least some regions of the respective contact pin are not cast into the carrier ring or are open towards the outside and serve for a contacting with the control circuit board and the respective transistor board. It is to be understood in addition that the respective transistor board can also be assigned multiple contact pins. Through the cast-in contact pin its position in the carrier is predefined so that the contacting of the respective transistor board with the control circuit board can take place in a simplified and automated manner.

In an advantageous embodiment of the inverter it is provided that the inverter comprises an annular cooling plate through which a cooling liquid can flow. The pressure plate is fastened to the cooling plate and the transistor boards lie against the cooling plate in a heat-transferring manner. The capacitors of the capacitor board are then axially guided between the transistor boards and through an opening of the annular cooling plate and lie radially against the cooling plate in a heat-transferring manner. Then, the battery terminals project between the transistor boards and between the capacitors axially through an opening of the annular cooling plate towards the outside. By way of the cooling plate, the transistors and the capacitors can be particularly effectively cooled. In order to increase the cooling performance, fins can be formed in a cooling passage of the cooling plate that can be flowed through. The cooling liquid can for example be water.

The invention also relates to an electric motor. The electric motor comprises a rotor that is rotatable about an axis of rotation and a stator which electromagnetically interact with one another. The stator comprises multiple stator coils, wherein at least some of the stator coils are directly electrically contacted with three electric phases via their coil wires. The electric motor comprises at least one electrically conductive phase terminal which is provided for the receptive phase and is connected with the assigned coil wire in an electrically conductive manner. According to the invention, the electric motor comprises the inverter described above. The inverter is fastened on the stator facing the phase terminals, wherein the phase terminals engage in the inverter and are electrically contacted with the transistor boards. Besides the stator coils, the stator can comprise a stator housing and/or a coil carrier, so that the formulation "on the stator" also includes the formulation "on the stator housing" and/or "on the coil carrier".

Advantageously it can be provided by the respective phase terminal lies radially outside of the assigned coil wire and because of this the assigned coil wire radially engages in the respective phase terminal. Between the respective phase terminals and the stator, an elastically deformable support each is arranged and the respective phase terminals are pressed against the stator by means of a pressure ring and because of this fastened on the stator. By way of the pressure ring, a pressure force is advantageously generated by way of which the phase terminals are securely fixed on the stator. The pressure ring can for example be screwed to the stator.

Further important features and advantages of the invention are obtained from the subclaims, from the drawings and from the assigned figure description by way of the drawings.

It is to be understood that the features mentioned above and still to be explained in the following cannot only be used in the respective combination stated but also in other combinations or by themselves without leaving the scope of the present invention.

Preferred exemplary embodiments of the invention are shown in the drawings and are explained in more detail in the following description, wherein same reference characters relate to same or similar or functionally same components.

It shows, in each case schematically
- Fig. 1 to 3: an exploded view and further views of an inverter according to the invention;
- Fig. 4: a view of a carrier in the inverter according to the invention;
- Fig. 5 to 7: views of the carrier with transistor boards in the inverter according to the invention;
- Fig. 8 and 9: an exploded view and a view of a capacitor board with battery terminals in the inverter according to the invention;
- Fig. 10: a view of the individual battery terminal in the inverter according to the invention;
- Fig. 11 and 12: views of the two battery terminals in the inverter according to the invention;
- Fig. 13: a view of the carrier with the transistor boards and a cooling plate in the inverter according to the invention;
- Fig. 14: a view of the cooling plate with transistors in the inverter according to the invention;
- Fig. 15 and 16: views of the cooling plate in the inverter according to the invention;
- Fig. 17: a view of the carrier with a foam pad in the inverter according to the invention;
- Fig. 18: a view of the carrier with a pressure plate in the inverter according to the invention;
- Fig. 19: a view of the carrier with a control circuit board in the inverter according to the invention;
- Fig. 20 and 21: views of the inverter according to the invention without a cover and with a cover;
- Fig. 22: a sectional view of the inverter according to the invention;
- Fig. 23: an exploded view of an electric motor according to the invention with the inverter according to the invention;
- Fig. 24: a sectional view of the electric motor according to the invention;
- Fig. 25: a view of the electric motor according to the invention without the inverter;
- Fig. 26 and 27: views of a phase terminal in the electric motor according to the invention.

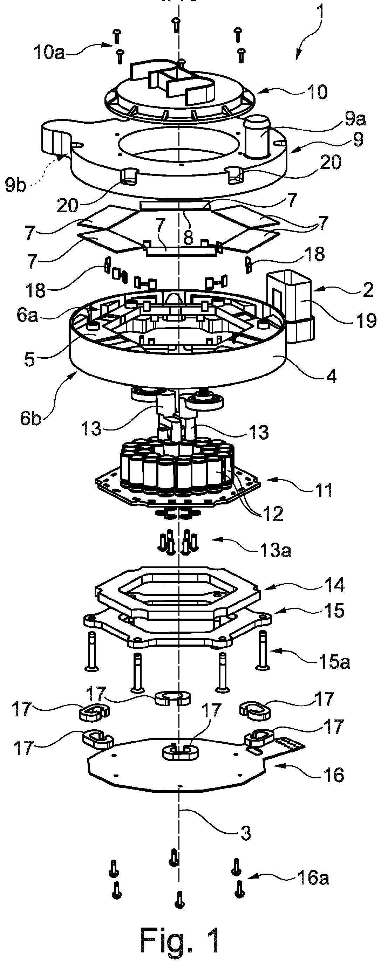

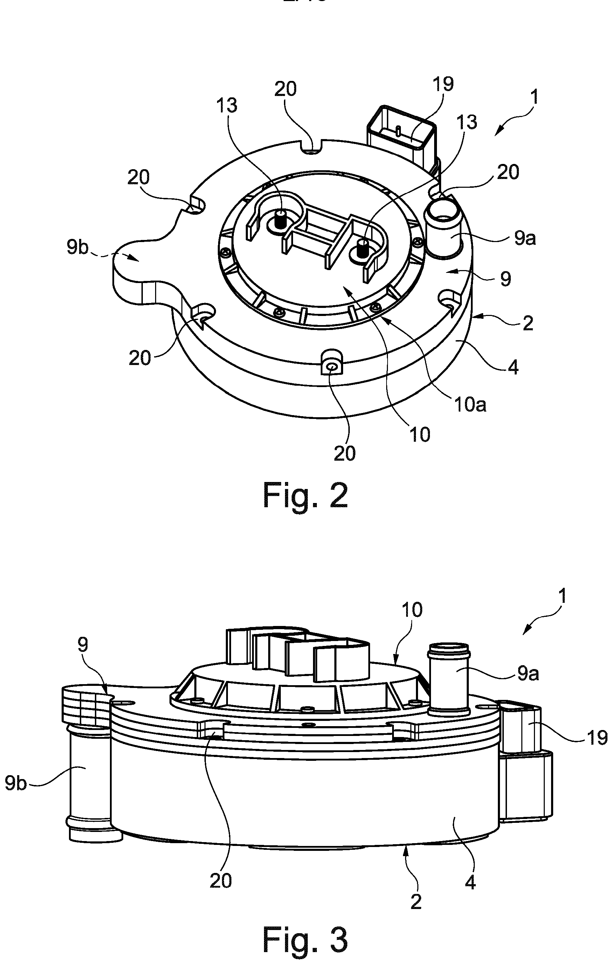

Fig. 1 shows an exploded view of an inverter 1 according to the invention for an electric motor 32. The inverter 1 comprises a carrier 2 with a centre axis 3. The carrier 2 has a wall 4 and an annular carrier ring 5. The wall 4 circulates about the centre axis 3 and is orientated axially. The carrier ring 5 is integrally formed on the wall 3 and orientated radially to the inside. The carrier ring 5 divides the carrier 2 into a first region 6a and into a second region 6b, which are axially adjacent. In the first region 6a, multiple transistor boards 7 with transistors 8, a cooling plate 9 and a cover 10 of the inverter 1 are mounted. In the second region 6b, a capacitor board 11 with capacitors 12, two battery terminals 13, a foam pad 14, a pressure plate 15, a control circuit board 16 and multiple iron cores 17 are mounted. The transistor boards 7 are electrically contacted with the capacitor board 11 by means of multiple contact bus bars 18 passing through the carrier ring 5. On the carrier 2, a connection 19 for the control circuit board 16 is additionally formed. Furthermore, the inverter 1 comprises a screw assembly 10a for the cover 10, a screw assembly 13a for the battery terminals 13, a screw assembly 15a for the pressure plate 15 and a screw assembly 16a for the control circuit board 16. The further construction of the inverter 1 is explained in more detail by way of Fig. 2 to Fig. 22.

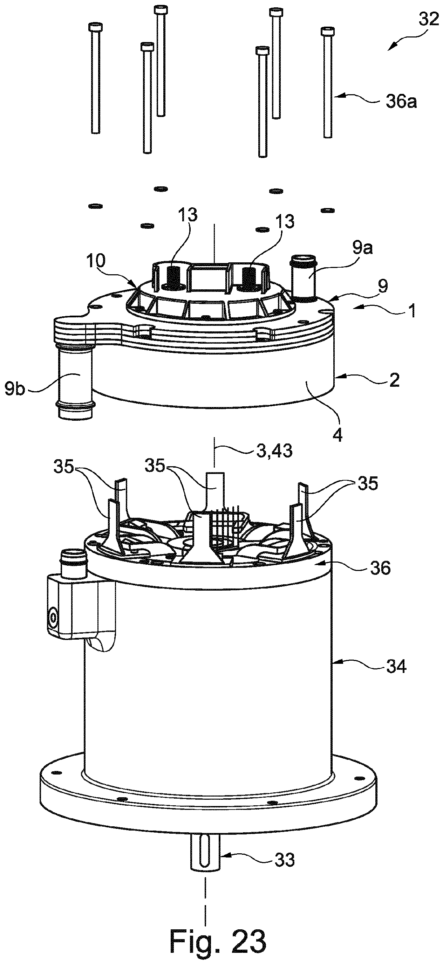

Fig. 2 and Fig. 3 show views of the assembled inverter 1 from a side facing the first region 6a of the carrier 2. In the inverter 1, the carrier 2 carries all further elements of the inverter 1, so that the inverter 1 forms a contiguous assembly unit ready for assembly. In other words, the inverter 1 can be assembled independently of further elements of the electric motor 32 - see also Fig. 23 in this regard. As is evident in Fig. 2, the two battery terminals 13 - which are practically assigned to the positive pole and the negative pole - project out of the cover 10. The cooling plate 9 can be flowed through by a cooling liquid - for example water - and comprises an inlet 9a and an outlet 9b for the cooling liquid. On the cooling plate 9, multiple screw openings 20 which are provided for fixing the inverter 1 in the electric motor 32 are additionally provided - see Fig. 23 in this regard.

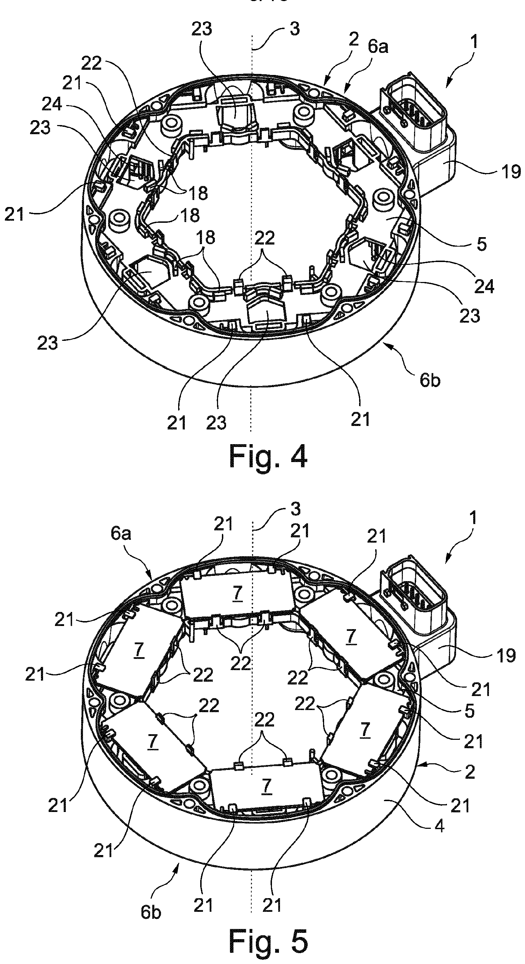

Fig. 4 shows a view of the carrier 2 from a side facing the first region 6a of the carrier 2. Here, the contact bus bars 18 are already received in the carrier ring 5 of the carrier 2. For this purpose, multiple slots are formed in the carrier ring 5 in which the contact bus bars 18 are received and axially orientated.

Fig. 5 shows a view of the carrier 2 with the transistor boards 7 from a side facing the first region 6a of the carrier 2. The transistor boards 7 are arranged circulating and distributed about the centre axis 3 and fixed to the carrier ring 5 in a clamping or force-fit manner. For this purpose, two undercut fixing elements 21 and two clips 22 each are formed on the carrier ring 5 for the respective transistor board 7. The respective fixing elements 21 are arranged radially outside and the respective clips 22 are arranged radially inside. During the fixing of the respective transistor board 7, the same is slid with one side under the fixing elements 21 and on a side located opposite clipped to the carrier ring 5 via the clips 22.

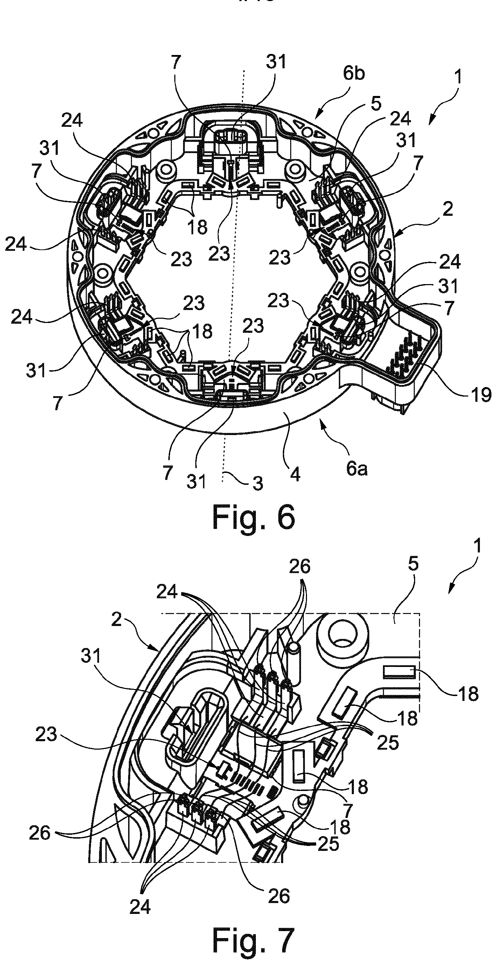

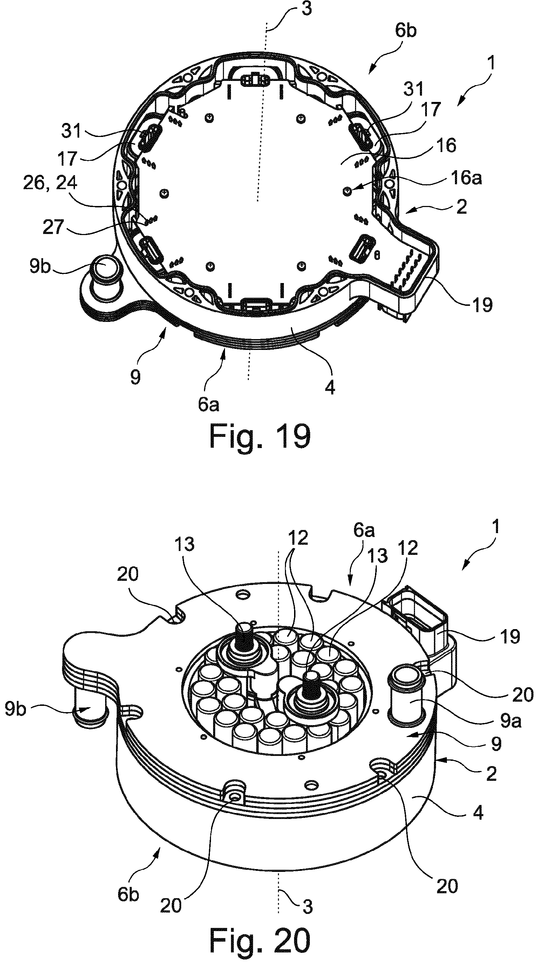

Fig. 6 now shows a view of the carrier 2 with the transistor boards 7 from a side facing the second region 6b of the carrier 2. Fig. 7 shows an enlarged extract from Fig. 6. The carrier ring 5 comprises a contact opening 23 for the respective transistor board 7 so that contact points of the respective transistor board 7 are accessible from a side of the carrier ring 5 facing the second region 6b. Furthermore, the inverter 1 comprises multiple electrically conductive contact pins 24 which are cast into the carrier ring 5. The contact pins 24 are arranged about the contact opening 23 and electrically contacted with contact points of the respective transistor board 7 via an electrically conductive wire 25 each. Here, the respective wire is wire bonded to the assigned contact point and the assigned contact pin 24. The respective contact pin 24 is L-shaped and extends in regions axially from the carrier ring 5 to the control circuit board 16. On the respective pin 24, a thickened portion 26 facing the control circuit board 16 is formed, which then engages in a receiving opening 27 of the control circuit board 16 - see also Fig. 19 in this regard - and fixes the contact pin 24 in the control circuit board 16 in a clamping manner. The contact bus bars 18 arranged in the slots of the carrier ring 5 are electrically contacted with the circuit boards 7.

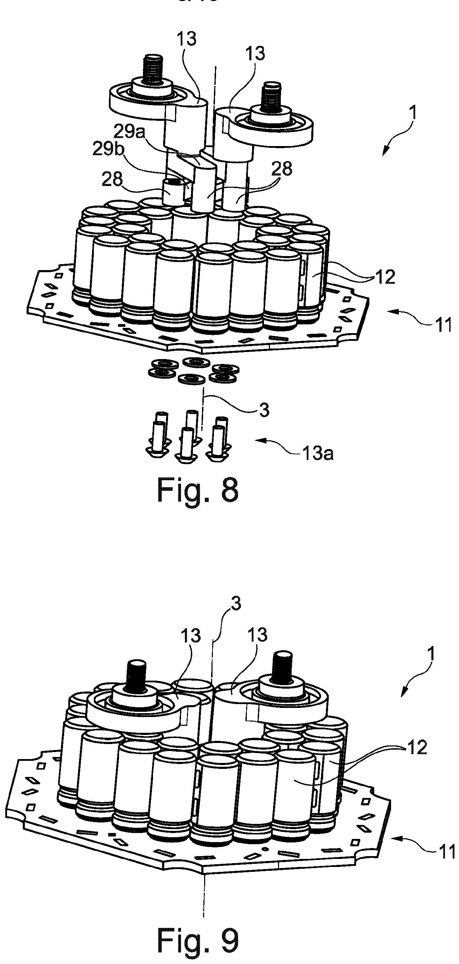

Fig. 8 shows an exploded view and Fig. 9 shows a view of the assembled state of the capacitor board 11, of the battery terminals 13 and of the screw assembly 13a. The battery terminals 13 are formed identically to one another and fastened in the centre on the capacitor board 11 by way of the screw assembly 13a. The respective battery terminal 13 is formed by a connector with a dielectric casing and electrically conductive lines located inside. The respective battery terminal 13 comprises altogether three pole contacts 28 which are electrically contacted with the capacitors 12 of the capacitor board 13 by means of an assigned screw of the screw assembly 13a each and via electrically conductive lines. The pole contacts 28 of the battery terminals 13 are arranged in a circle and centrally on the capacitor board 11. The capacitors 12 surround the pole contacts 28 of the battery terminals and are arranged symmetrically on the capacitor board 11. The one battery terminal 13 is assigned to the negative pole and the other battery terminal 13 is assigned to the positive pole.

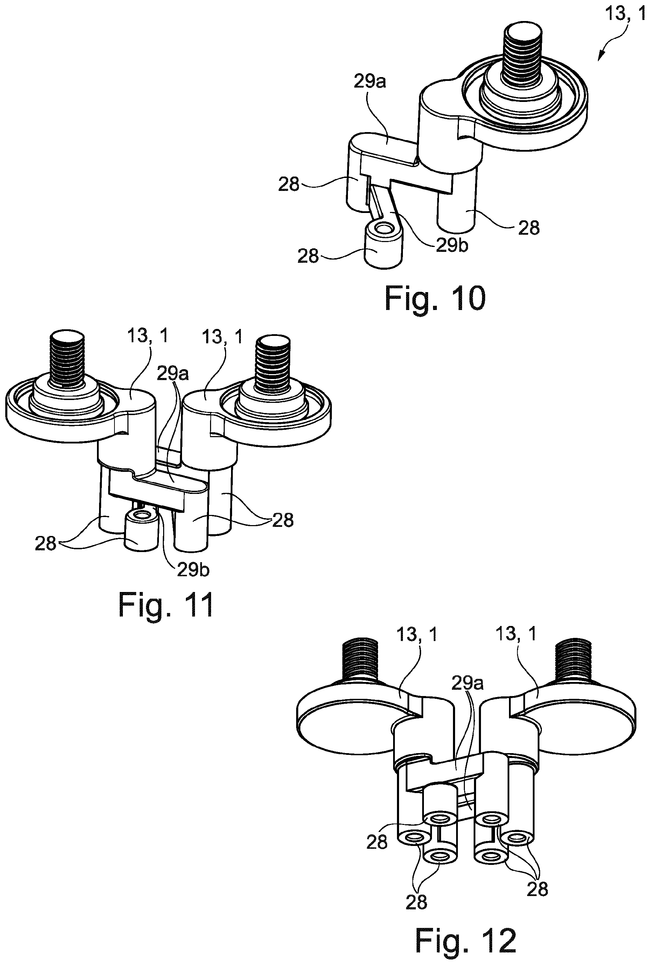

Fig. 10 now shows a view of the individual battery terminal 13. Fig. 11 and Fig. 12 show views of the battery terminals 13. The respective battery terminal 13 comprises a first bridge 29 that is parallel to the capacitor board 11 and a second bridge 29b that is parallel to the capacitor board 11. The first bridge 29a and the second bridge 29b are formed axially offset to one another. The respective bridge 29a or 29b connects two of the pole contacts 28 of the receptive battery terminal 13 to one another in an electrically conductive manner. As is evident in Fig. 11 and Fig. 12, the first bridge 29a of the one battery terminal 13 bridges the second bridge 29b of the other battery terminal 13, so that the pole contacts 28 of the battery terminals 13 are arranged in a circle and alternating one another in the circle.

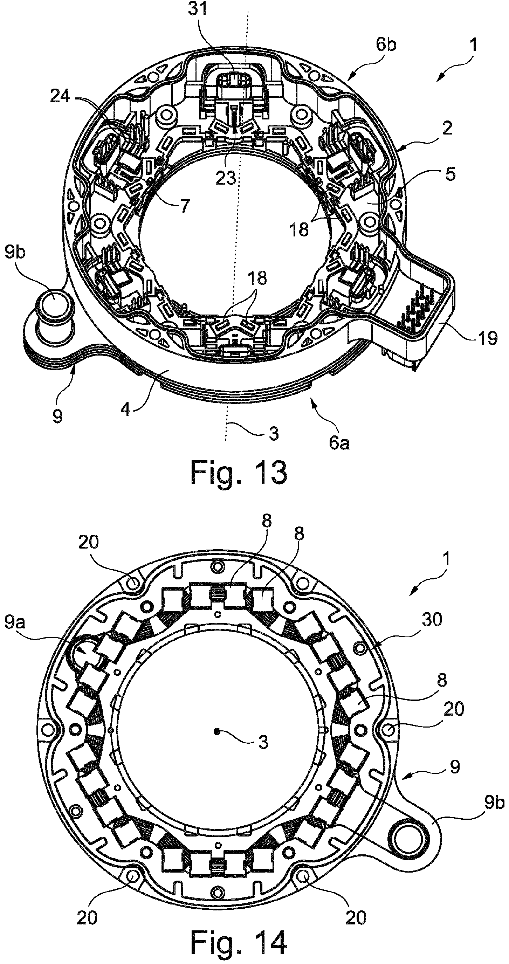

Fig. 13 shows a view of the carrier 2 with the transistor boards 7 and the cooling plate 9 from a side facing the second region 6b of the carrier 2. As is noticeable here, the annular cooling plate 9 lies in the first region 6a of the carrier 2 against the transistor boards 7 in a heat-transferring manner. Fig. 14 shows a view of the cooling plate 9 with transistors 8 of the respective transistor boards 7. Here, the transistor boards 7 are shown transparently for the sake of clarity.

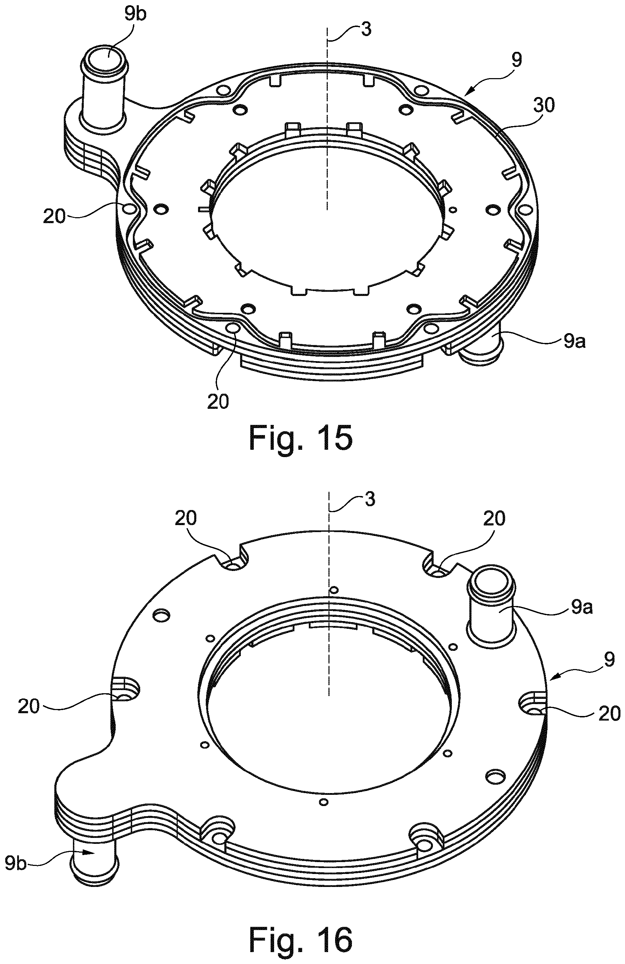

Fig. 15 shows a view of the cooling plate 9 from a side facing the carrier 2 and Fig. 16 shows a view of the cooling plate 9 from a side facing away from the carrier 2. As already explained above, the cooling plate 9 comprises the inlet 9a and the outlet 9b and can be flowed through by the cooling liquid. In Fig. 14 and Fig. 15, a circumferential groove 30 is additionally evident, in which the wall 4 of the carrier 2 is received in a form-fit and non-displaceable manner.

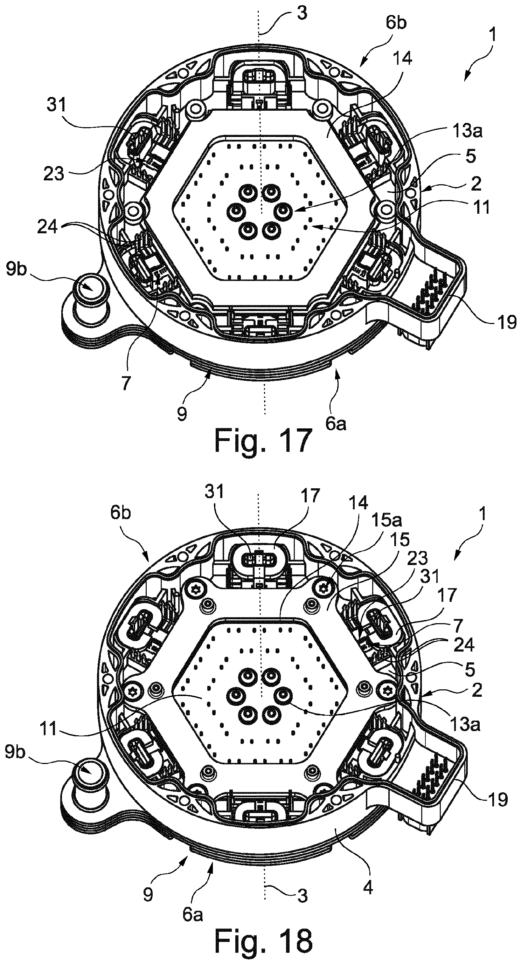

Fig. 17 shows a view of the carrier 2 with the foam pad 14 and Fig. 18 shows a view of the carrier 2 with the pressure plate 15 from a side facing the second region 6b of the carrier 2. Here, the pressure plate 15 is connected to the cooling plate 9 through the carrier ring 5 by way of the screw assembly 15a and presses the foam pad 14 against the capacitor board 11 and the capacitor board 11 against contact bus bars 18. Because of this, the contact bus bars 18 are compressed between the transistor boards 7 and the capacitor board 11 and interconnect the transistor boards 7 and the capacitor board 11 in an electrically conductive manner. As is evident in Fig. 18, the iron cores 17 are arranged in receptacles 31 of the carrier ring 5. The receptacles 31 are provided for receiving phase terminals 35 of the electric motor 32.

Fig. 19 shows a view of the carrier 2 with the control circuit board 16 from a side facing the second region 6b of the carrier 2. The thickened portions 26 of the contact pins 24 engage in the receiving openings 27 of the control circuit board 16, as a result of which the contact pins 24 are fixed in the control circuit board 16 in a force-fit manner. By way of the screw assembly 16a, the control circuit board 16 is screwed to the pressure plate 15.

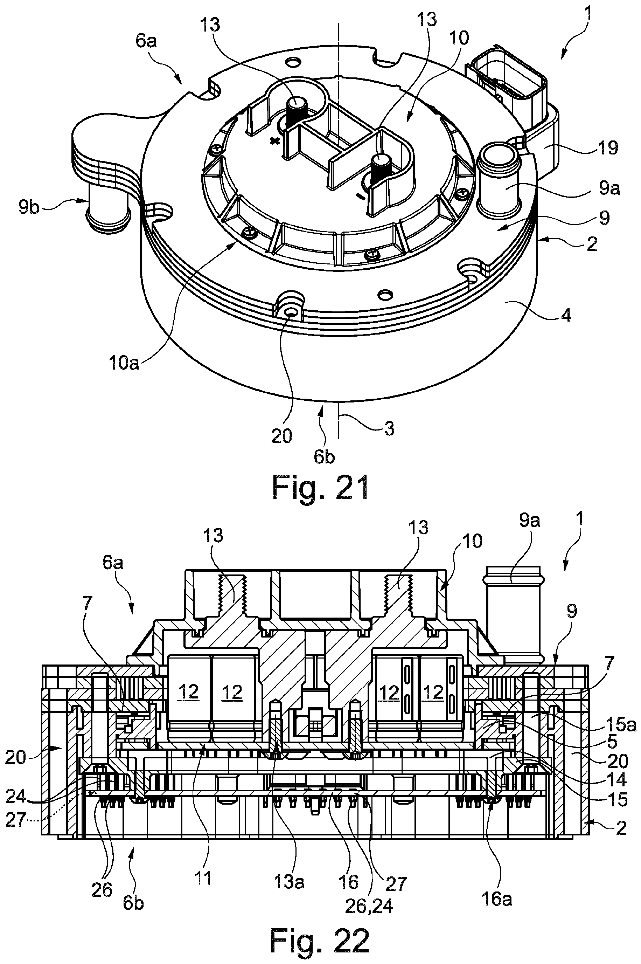

Fig. 20 shows a view of the inverter 1 without the cover 10 and Fig. 21 shows a view of the inverter 1 with the cover 10 from a side facing the first region 6a of the carrier 2. As is evident in Fig. 20, the battery terminals 13 project through the carrier ring 5 and the cooling plate 9 axially to the outside and the capacitors 12 are arranged on the capacitor board 11 symmetrically about the battery terminals 13. In Fig. 21 it is noticeable that the cover 10 is screwed to the cooling plate 9 by means of the screw assembly 10a and the battery terminals 13 project through the cover 10 to the outside.

Fig. 22 shows a sectional view of the inverter 1. The capacitor board 11 lies against the carrier ring 5 in the second region 6b of the carrier 2 and the capacitors 12 of the capacitor board 11 project through an opening of the carrier ring 5 into the first region 6a of the carrier 2. The pressure plate 15 is firmly connected to the cooling plate 9, so that the foam pad 14, the capacitor board 11, the contact bus bars 18, and the transistor boards 7 are pressed together i.e. are sandwiched between the pressure plate 15 and the cooling plate 9. Here, the capacitor board 11 is pressed against the contact bus bars 18 by the foam pad 14 and the pressure plate 15. The transistor boards 7 are fixed on the carrier ring 5 in the first region 6a of the carrier 2 and distributed about the opening of the carrier ring 5 and thus about the capacitors 12. The contact bus bars 18 are compressed between the capacitor board 11 and the transistor boards 7 and because of this the transistor boards 7 and the capacitor board 11 are electrically contacted with one another. The battery terminals 13 are fastened centrally on the capacitor board 11 and project through the opening of the carrier ring 5 out of the second region 6b into the first region 6a of the carrier 2. Furthermore, the battery terminals are led through the cover 10 of the inverter axially to the outside. The control circuit board 16 is arranged in the second region 6b of the carrier 2 and screwed to the pressure plate 15. By way of the contact pins 24 in the carrier 2, the control circuit board 16 is electrically contacted with the transistor boards 7.

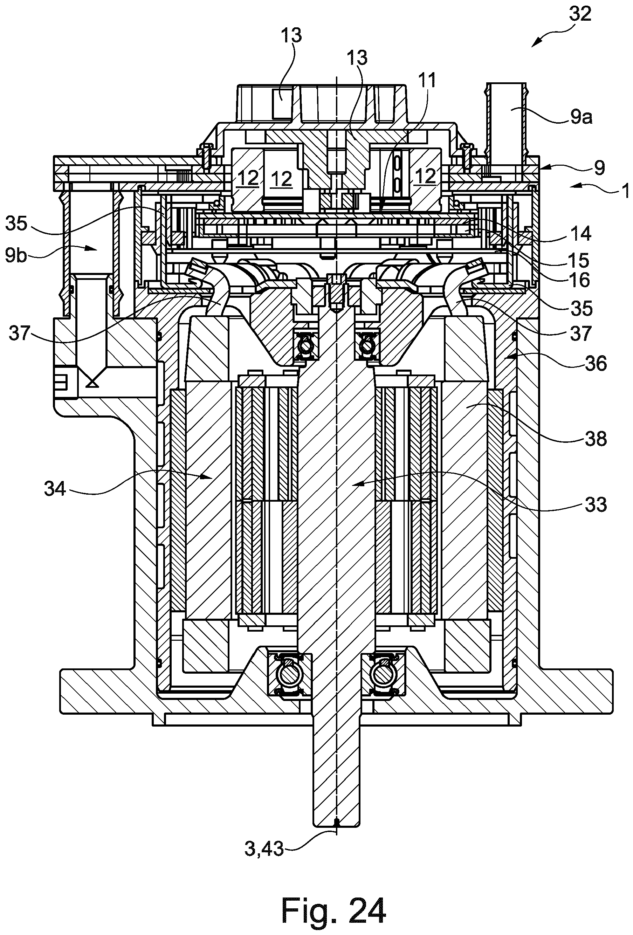

Fig. 23 shows an exploded view and Fig. 24 shows a sectional view of an electric motor 32 according to the invention. The electric motor 32 comprises a rotor 33 and a stator 34 which electromagnetically interact with one another. Here, the rotor 33 is rotatable about an axis of rotation 43 which coincides with the centre axis 3 of the carrier 2 or inverter 1. The stator 34 comprises multiple coils 38 and a stator housing 36 which receives the coils 38. The rotor 33 is arranged in the stator 34 so that the coils 38 and the stator housing 36 encase the rotor 33. The inverter 1 is arranged axially to the stator 34 and connected to the stator housing 36 in a fixed manner by way of a screw assembly 36a. For this purpose, continuous screw openings 20 are provided in the cooling plate 9 of the inverter 1. The stator 34 is electrically contacted with the inverter 1 via multiple phase terminals 35, for the purpose of which the phase terminals 35 engage in the receptacles 31 of the inverter 1 and are connected to the transistor boards 7 of the inverter 1 in an electrically conductive manner. The phase terminals 35 are distributed symmetrically about the axis of rotation 43 and arranged on assigned coil wires 37 radially outside.

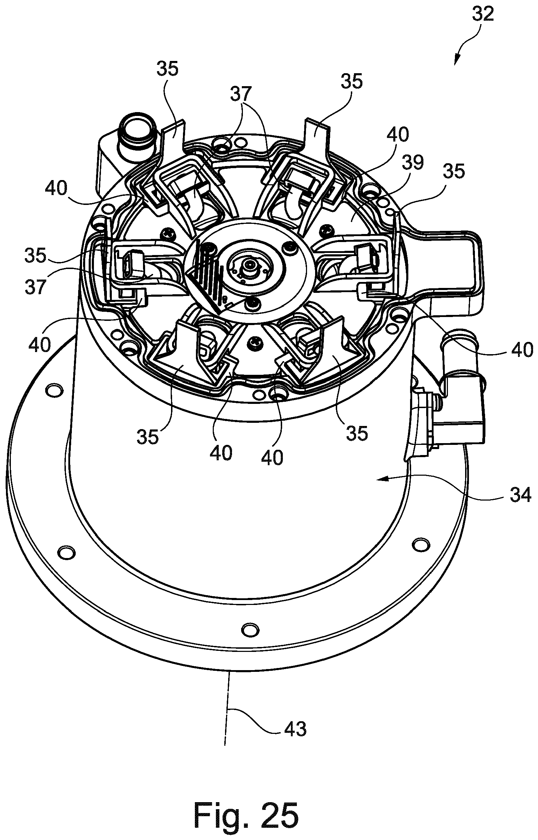

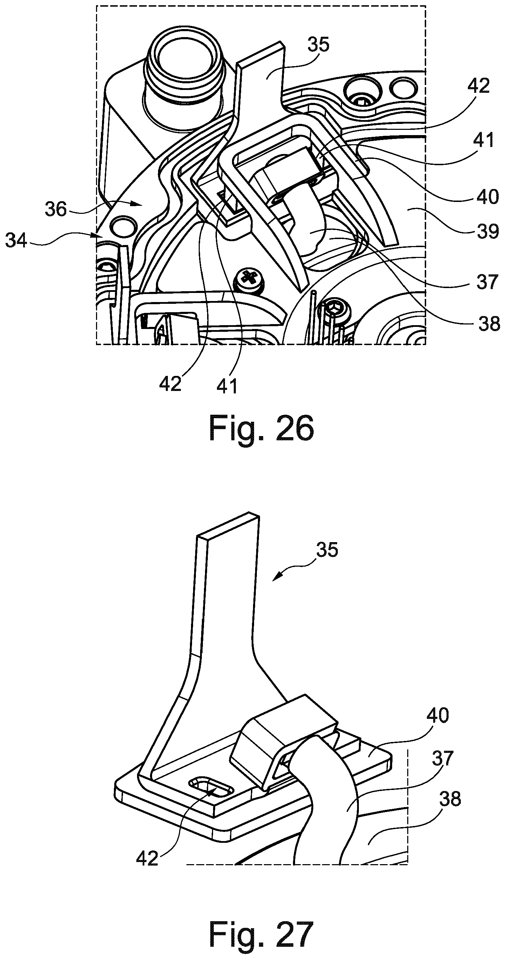

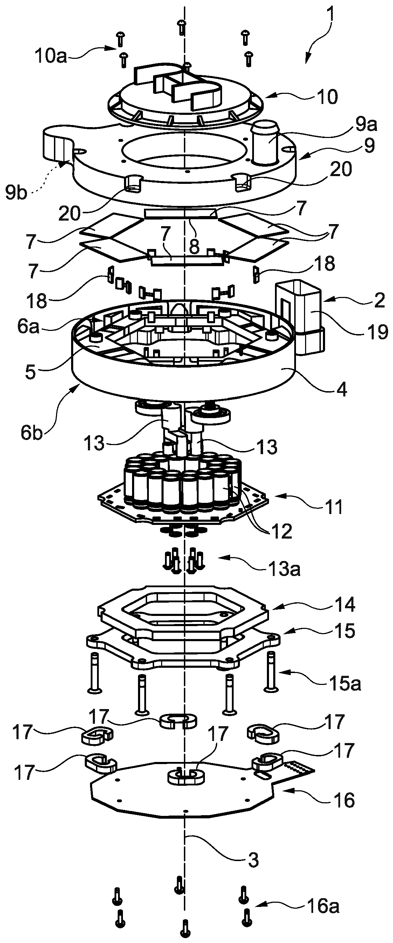

Fig. 25 shows a view of the electric motor 32 without the inverter 1. Fig. 26 and Fig. 27 show views of the individual phase terminal 35 in the electric motor 32. The phase terminals 35 are arranged on the assigned coil wires 37 radially outside and are connected to these in an electrically conductive manner. The respective coil wire 37 engages radially in the respective phase terminal 35. The respective phase terminal 35 is L-shaped and, with a pressure ring 39, pressed against the stator 34 or against the stator housing 36. Between the respective phase terminal 35 and the stator 34 or the stator housing 36, an elastically deformable support 40 each is arranged. As is particularly clearly noticeable in Fig. 26, the pressure ring 39 for the respective phase terminal 35 has two position projections 41. The position projections 41 engage in position openings 42 of the respective phase terminal 35, as a result of which the phase terminals 35 are fixed, correctly positioned, on the stator 34.

The inverter 1 according to the invention can be finish-assembled independently of further elements of the electric motor 32. Because of this, both the effort and also the costs can be reduced. In addition, the inverter 1 can be electrically contacted with the stator 34 in a simplified and secure manner.

## Claims

1. An inverter (1) for an electric motor (32),
- wherein the inverter (1) comprises a capacitor board (11) having multiple capacitors (12), multiple transistor boards (7) each having multiple transistors (8) and a control circuit board (16),
- wherein the capacitor board (11), the respective transistor boards (7) and the control circuit board (16) lie axially on top of one another and are electrically interconnected with one another,
- wherein the inverter (1), for the negative pole and for the positive pole, comprises a battery terminal (13) each, which is connected to the capacitor board (11) in an electrically conductive manner and axially projects from the capacitor board (11),
- wherein the positive and negative pole battery terminals (13) are identical to one another and are formed by a connector each with an external dielectric casing formed by a cover (10) of the inverter (1) and electrically conductive lines located inside the inverter (1) and project out of the cover (10) to the outside of the inverter (1),
- wherein each the respective battery terminal (13) comprises three pole contacts (28) for contacting with the capacitor board (11),
- wherein the capacitors (12) are annularly arranged on the capacitor board (11), **characterized in**
- **that** the two said battery terminals (13) are arranged side by side between the capacitors (12) and centrally on the capacitor board (11), and
- **that** the pole contacts (28) of the one battery terminal (13) and the pole contacts (28) of the other battery terminal (13) are arranged on the capacitor board (11) in a circle and alternating one another in the circle.

2. The inverter according to Claim 1,
**characterized in**
**that** the pole contacts (28) of the battery terminals (13) are arranged symmetrically in the centre of the capacitor board (11).

3. The inverter according to Claim 1 or 2,
**characterized in**
- **that** the respective battery terminal (13) comprises a first bridge (29a) that is parallel to the capacitor board (11), which connects the central pole contact (28) with the one lateral pole contact (28) in an electrically conducive manner, and
- **that** the respective battery terminal (13) comprises a second bridge (29b) that is parallel to the capacitor board (11), which connects the central pole contact (28) with the other lateral pole contact (28) in an electrically conductive manner, and
- **that** the first bridge (29a) and the second bridge (29b) are orientated at an angle to one another and axially offset to one another.

4. The inverter according to Claim 3,
**characterized in**
**that** in each case the first bridge (29a) of the one battery terminal (13) bridges the second bridge (29b) of the other battery terminal (13), so that the pole contacts (28) of the one battery terminal (13) and the pole contacts (28) of the other battery terminal (13) are arranged in a circle and alternating one another in the circle.

5. The inverter according to any one of the Claims 2 to 3,
**characterized in**
**that** on one of the pole contacts (28) of the respective battery terminal (13) a contact connector is formed, which axially projects from the capacitor board (11) and leads to the outside, so that by way of the contact connector the pole contacts (28) of the respective battery terminal (13) are contactable to the outside in an electrically conductive manner.

6. The inverter according to any one of the Claims 1 to 5,
**characterized in**
- **that** the inverter (1) comprises a hollow-cylindrical carrier (2) with a centre axis (3), which carries the capacitor board (11), the transistor boards (7) and the control circuit board (16) and encases the same in the circumferential direction towards the outside, and
- **that** an annular carrier ring (5) is integrally formed in the carrier (2) and is orientated transversely to the centre axis (3), and
- **that** a pressure plate (15) is firmly connected to a cooling plate (9), so that an elastically deformable foam pad (14), the capacitor board (11), the carrier ring (5), and the transistor boards (7) are pressed together between the pressure plate (15) and the cooling plate (9).

7. The inverter according to Claim 6,
**characterized in**
**that** the battery terminals (13) project through an opening of the annular carrier ring (5) to the outside.

8. The inverter according to Claim 6 or 7,
**characterized in**
**that** the transistor boards (7) are fastened on the annular carrier ring (5), facing away from the capacitor board (11) and circulating about the centre axis (3) in a distributed and clamping manner.

9. The inverter according to Claim 8,
**characterized in**
- **that** in the carrier ring (5) of the carrier (2) multiple contact pins (24) are cast, which are axially orientated from the transistor boards (7) to the control circuit board (16) and circulate about the capacitor board (11), and
- **that** the respective transistor board (7) is electrically contacted with the respective assigned contact pin (24) via an electrically conductive wire (25), which is wire bonded to the respective transistor board (7) and to the respective contact pin (24), and
- **that** the respective contact pin (24) towards the control circuit board (16) each has an end-side thickened portion (26) and the control circuit board (16), for the respective thickened portion (26), comprises a receiving opening (27), and
- **that** the respective thickened portion (26) engages in the respective receiving opening (27) and by way of this the respective contact pin (24) is fastened in the control circuit board (16) in a clamping manner and electrically contacted with the control circuit board (16).

10. The inverter according to any one of the Claims 6 to 9,
**characterized in**
- **that** on the carrier ring (5) of the carrier (2) multiple axial slots are formed, in which a contact bus bar (18) each is received, and
- **that** the respective contact bus bar (18) is compressed between the respective transistor board (7) and the capacitor board (11) and because of this the transistor boards (7) are electrically contacted with the capacitor board (11).

11. The inverter according to any one of the Claims 1 to 10,
**characterized in**
- **that** the inverter (1) comprises an annular cooling plate (9) through which a cooling liquid can flow, which lies against the transistor boards (7) in a heat-transferring manner, and
- **that** the capacitors (12) of the capacitor board (11) are axially guided between the transistor boards (7) and through an opening of the annular cooling plate (9) and lie against the cooling plate (9) radially and in a heat-transferring manner, and
- **that** the battery terminals (13) between the transistor boards (7) and between the capacitors (12) project through the opening of the annular cooling plate (9) axially to the outside.

12. An electric motor (32),
- wherein the electric motor (32) comprises a rotor (33) that is rotatable about an axis of rotation (43) and a stator (34), which electromagnetically interact with one another,
- wherein the stator (34) comprises multiple stator coils (38), wherein at least some of the stator coils (38), via their coil wires (37), are directly contacted electrically with three electric phases, and
- wherein the electric motor (32) for the respective phase comprises at least one electrically conductive phase terminal (35), which are connected to the assigned coil wire (37) in an electrically conductive manner,
**characterized in**
**that** the electric motor (32) comprises the inverter (1) according to any one of the preceding claims, which is fastened to the stator (34) facing the phase terminals (35), wherein the phase terminals (35) engage in the inverter (1) and are electrically contacted with the transistors boards (7).

13. The motor according to Claim 12,
**characterized in**
- **that** the respective phase terminal (35) radially outside the assigned coil wire (37) and because of this the assigned coil wire (37) engages radially in the respective phase terminal (35), and
- **that** between the respective phase terminals (35) and the stator (34) an elastically deformable support (40) each is arranged and the respective phase terminals (35) are pressed against the stator (34) by means of a pressure ring (39) and by way of this are fastened to the stator (34).

## Patentansprüche

1. Wechselrichter (1) für einen Elektromotor (32),
- wobei der Wechselrichter (1) eine Kondensatorplatine (11) umfasst, die mehrere Kondensatoren (12), mehrere Transistorplatinen (7) aufweist, die jeweils mehreren Transistoren (8) und eine Steuerplatine (16) aufweisen,
- wobei die Kondensatorplatine (11), die jeweiligen Transistorplatinen (7) und die Steuerplatine (16) axial übereinander liegen und elektrisch miteinander verbunden sind,
- wobei der Wechselrichter (1) für den Minuspol und für den Pluspol jeweils eine Batterieklemme (13) umfasst, welche mit der Kondensatorplatine (11) elektrisch leitend verbunden ist und axial aus der Kondensatorplatine (11) hervorsteht,
- wobei die Batterieklemmen des Plus- und Minuspols (13) zueinander identisch sind und durch jeweils einen Steckverbinder jeweils mit einer äußeren dielektrischen Ummantelung, welche durch eine Abdeckung (10) des Wechselrichters (1) gebildet wird, und elektrisch leitfähigen Leitungen gebildet werden, welche sich im Inneren des Wechselrichters (1) befinden und aus der Abdeckung (10) zur Außenseite des Wechselrichters (1) hervorstehen,
- wobei jede jeweilige Batterieklemme (13) drei Polkontakte (28) zum Kontaktieren mit der Kondensatorplatine (11) umfasst,
- wobei die Kondensatoren (12) ringförmig auf der Kondensatorplatine (11) angeordnet sind,
**dadurch gekennzeichnet,**
- **dass** die zwei Batterieklemmen (13) nebeneinander zwischen den Kondensatoren (12) und mittig auf der Kondensatorplatine (11) angeordnet sind, und
- **dass** die Polkontakte (28) der einen Batterieklemme (13) und die Polkontakte (28) der anderen Batterieklemme (13) auf der Kondensatorplatine (11) in einem Kreis abwechselnd zueinander angeordnet sind.

2. Wechselrichter nach Anspruch 1, **dadurch gekennzeichnet,**
**dass** die Polkontakte (28) der Batterieklemmen (13) symmetrisch in der Mitte der Kondensatorplatine (11) angeordnet sind.

3. Wechselrichter nach Anspruch 1 oder 2,
**dadurch gekennzeichnet,**
- **dass** die jeweilige Batterieklemme (13) eine erste Brücke (29a) umfasst, die parallel zur Kondensatorplatine (11) ist, welche den mittleren Polkontakt (28) mit dem einen seitlichen Polkontakt (28) elektrisch leitend verbindet, und
- **dass** die jeweilige Batterieklemme (13) eine zweite Brücke (29b) umfasst, die parallel zur Kondensatorplatine (11) ist; welche den mittleren Polkontakt (28) mit dem anderen seitlichen Polkontakt (28) elektrisch leitend verbindet, und
- **dass** die erste Brücke (29a) und die zweite Brücke (29b) in einem Winkel zueinander ausgerichtet und axial voneinander versetzt sind.

4. Wechselrichter nach Anspruch 3,
**dadurch gekennzeichnet, dass** in jedem Fall die erste Brücke (29a) der einen Batterieklemme (13) die zweite Brücke (29b) der anderen Batterieklemme (13) überbrückt, sodass die Polkontakte (28) der einen Batterieklemme (13) und die Polkontakte (28) der anderen Batterieklemme (13) in einem Kreis und abwechselnd zueinander angeordnet sind.

5. Wechselrichter nach einem der Ansprüche 2 bis 3,
**dadurch gekennzeichnet, dass** an einem der Polkontakte (28) der jeweiligen Batterieklemme (13) ein Kontaktverbinder gebildet ist, welcher axial aus der Kondensatorplatine (11) hervorsteht und nach außen führt, sodass über den Kontaktverbinder die Polkontakte (28) der jeweiligen Batterieklemme (13) nach außen elektrisch leitend kontaktierbar sind.

6. Wechselrichter nach einem der Ansprüche 1 bis 5,
**dadurch gekennzeichnet,**
- **dass** der Wechselrichter (1) einen hohlzylindrischen Träger (2) mit einer Mittelachse (3) umfasst, welcher die Kondensatorplatine (11), die Transistorplatinen (7) und die Steuerplatine (16) trägt und dieselbe in der Umfangsrichtung nach außen umschließt, und
- **dass** ein ringförmige Trägerring (5) in einem Stück in dem Träger (2) gebildet ist, und quer zu der Mittelachse (3) ausgerichtet ist, und
- **dass** eine Druckplatte (15) fest mit einer Kühlplatte (9) verbunden ist, sodass ein elastisch verformbares Schaumstoffpolster (14), die Kondensatorplatine (11), der Trägerring (5) und die Transistorplatinen (7) zwischen der Druckplatte (15) und der Kühlplatte (9) zusammengepresst werden.

7. Wechselrichter nach Anspruch 6,
**dadurch gekennzeichnet, dass** die Batterieklemmen (13) durch eine Öffnung des ringförmigen Trägerrings (5) nach außen hervorstehen.

8. Wechselrichter nach Anspruch 6 oder 7,
**dadurch gekennzeichnet, dass** die Transistorplatinen (7) auf dem ringförmigen Trägerring (5) von der Kondensatorplatine (11) abgewandt und um die Mittelachse (3) umlaufend verteilt und klemmend befestigt sind.

9. Wechselrichter nach Anspruch 8,
**dadurch gekennzeichnet,**
- **dass** in dem Trägerring (5) des Trägers (2) mehrere Kontaktstifte (24) eingegossen sind, welche axial von den Transistorplatinen (7) zu der Steuerplatine (16) ausgerichtet sind und um die Kondensatorplatine (11) umlaufen, und
- **dass** die jeweilige Transistorplatine (7) über einen elektrisch leitenden Draht (25), welcher mit der jeweiligen Transistorplatine (7) und mit dem jeweiligen Kontaktstift (24) drahtgebunden ist, elektrisch mit dem jeweils zugeordneten Kontaktstift (24) kontaktiert ist, und
- **dass** der jeweilige Kontaktstift (24) zu der Steuerplatine (16) hin jeweils einen endseitig verdickten Abschnitt (26) aufweist und die Steuerplatine (16) für den jeweiligen verdickten Abschnitt (26) eine Aufnahmeöffnung (27) umfasst, und
- **dass** der jeweilige verdickte Abschnitt (26) in die jeweilige Aufnahmeöffnung (27) eingreift und hierdurch der jeweilige Kontaktstift (24) klemmend in der Steuerplatine (16) befestigt, und elektrisch mit der Steuerplatine (16) kontaktiert ist.

10. Wechselrichter nach einem der Ansprüche 6 bis 9,
**dadurch gekennzeichnet,**
- **dass** an dem Trägerring (5) des Trägers (2) mehrere axiale Schlitze gebildet sind, in welchen jeweils eine Kontaktsammelschiene (18) aufgenommen ist, und
- **dass** die jeweilige Kontaktsammelschiene (18) zwischen der jeweiligen Transistorplatine (7) und der Kondensatorplatine (11) zusammengedrückt ist, und deshalb die Transistorplatinen (7) mit der Kondensatorplatine (11) elektrisch kontaktiert sind.

11. Wechselrichter nach einem der Ansprüche 1 bis 10,
**dadurch gekennzeichnet,**
- **dass** der Wechselrichter (1) eine ringförmige Kühlplatte (9) umfasst, durch die eine Kühlflüssigkeit fließen kann, welche wärmeübertragend an den Transistorplatinen (7) anliegt, und
- **dass** die Kondensatoren (12) der Kondensatorplatine (11) axial zwischen den Transistorplatinen (7) und durch eine Öffnung der ringförmigen Kühlplatte (9) geführt sind und radial und wärmeübertragend an der Kühlplatte (9) anliegen, und
- **dass** die Batterieklemmen (13) zwischen den Transistorplatinen (7) und zwischen den Kondensatoren (12) durch die Öffnung der ringförmigen Kühlplatte (9) axial nach außen hervorstehen.

12. Elektromotor (32),
- wobei der Elektromotor (32) einen Rotor (33), der um eine Drehachse (43) drehbar ist, und einen Stator (34) umfasst, die elektromagnetisch miteinander zusammenwirken,
- wobei der Stator (34) mehrere Statorspulen (38) umfasst, wobei zumindest einige der Statorspulen (38) über ihre Spulendrähte (37) elektrisch direkt mit drei elektrischen Phasen kontaktiert sind, und
- wobei der Elektromotor (32) für die jeweilige Phase zumindest eine elektrisch leitende Phasenklemme (35) umfasst, welche mit dem zugeordneten Spulendraht (37) elektrisch leitend verbunden ist,
**dadurch gekennzeichnet,**
**dass** der Elektromotor (32) den Wechselrichter (1) nach einem der vorstehenden Ansprüche umfasst, welcher den Phasenklemmen (35) zugewandt am Stator (34) befestigt ist, wobei die Phasenklemmen (35) in den Wechselrichter (1) eingreifen und elektrisch mit den Transistorplatinen (7) kontaktiert sind.

13. Motor nach Anspruch 12,
**dadurch gekennzeichnet,**
- **dass** die jeweilige Phasenklemme (35) radial außerhalb des zugeordneten Spulendrahtes (37) liegt und der zugeordnete Spulendraht (37) deshalb radial in die jeweiligen Phasenklemme (35) eingreift, und
- **dass** zwischen den jeweiligen Phasenklemmen (35) und dem Stator (34) jeweils eine elastisch verformbare Halterung (40) angeordnet ist und die jeweiligen Phasenklemmen (35) anhand eines Druckrings (39) gegen den Stator (34) gedrückt wird und über diesen an dem Stator (34) befestigt sind.

## Revendications

1. Onduleur (1) pour un moteur électrique (32),
- dans lequel l'onduleur (1) comprend une carte de condensateurs (11) présentant de multiples condensateurs (12), de multiples cartes de transistors (7) présentant chacune de multiple transistors (8) et une carte de circuit de commande (16),
- dans lequel la carte de condensateurs (11), les cartes de transistors respectives (7) et la carte de circuit de commande (16) se trouvent axialement les unes au-dessus des autres et sont interconnectées électriquement les unes aux autres,
- dans lequel l'onduleur (1), pour le pôle négatif et pour le pôle positif, comprend chacun une borne de batterie (13), qui est connectée à la carte de condensateurs (11) de manière électroconductrice et fait saillie axialement à partir de la carte de condensateurs (11),
- dans lequel les bornes de batterie positive et négative (13) sont identiques l'une à l'autre et sont formées par un connecteur chacune avec un boîtier diélectrique externe formé par un couvercle (10) de l'onduleur (1) et des lignes électroconductrices situées à l'intérieur de l'onduleur (1) et font saillie à partir du couvercle (10) vers l'extérieur de l'onduleur (1),
- dans lequel chaque borne de batterie respective (13) comprend des contacts tripolaires (28) pour entrer en contact avec la carte de condensateurs (11),
- dans lequel les condensateurs (12) sont agencés de manière annulaire sur la carte de condensateurs (11),
**caractérisé en ce**
- **que** les deux dites bornes de batterie (13) sont agencées côte à côte entre les condensateurs (12) et au centre de la carte de condensateurs (11), et
- **que** les contacts polaires (28) d'une première borne de batterie (13) et les contacts polaires (28) de l'autre borne de batterie (13) sont agencés en un cercle sur la carte de condensateurs (11), et en alternance dans le cercle.

2. Onduleur selon la revendication 1, **caractérisé en ce**
**que** les contacts polaires (28) des bornes de batterie (13) sont agencés symétriquement au centre de la carte de condensateurs (11).

3. Onduleur selon la revendication 1 ou 2,
**caractérisé en ce**
- **que** la borne de batterie respective (13) comprend un premier pont (29a) parallèle à la carte de condensateurs (11), qui connecte le contact polaire central (28) au premier contact polaire latéral (28) d'une manière électroconductrice, et
- **que** la borne de batterie respective (13) comprend un second pont (29b) qui est parallèle à la carte de condensateurs (11), qui connecte le contact polaire central (28) à l'autre contact polaire latéral (28) d'une manière électroconductrice, et
- **que** le premier pont (29a) et le second pont (29b) sont orientés selon un angle l'un par rapport à l'autre et décalés axialement l'un par rapport à l'autre.

4. Onduleur selon la revendication 3,
**caractérisé en ce que**, dans chaque cas, le premier pont (29a) de la première borne de batterie (13) relie le seconde pont (29b) de l'autre borne de batterie (13) de telle sorte que les contacts polaires (28) de la première borne de batterie ( 13) et les contacts polaires (28) de l'autre borne de batterie (13) soient agencés en un cercle et en alternance dans le cercle.

5. Onduleur selon l'une quelconque des revendications 2 à 3,
**caractérisé en ce que** sur l'un des contacts polaires (28) de la borne de batterie respective (13) est formé un connecteur de contact, qui fait saillie axialement à partir de la carte de condensateurs (11) et mène vers l'extérieur, de telle sorte qu'au moyen du connecteur de contact, les contacts polaires (28) de la borne de batterie respective (13) puissent être mis en contact avec l'extérieur d'une manière électroconductrice.

6. Onduleur selon l'une quelconque des revendications 1 à 5,
**caractérisé en ce**
- **que** l'onduleur (1) comprend un support cylindrique creux (2) avec un axe central (3), qui supporte la carte de condensateurs (11), les cartes de transistors (7) et la carte de circuit de commande (16) et les enveloppe dans la direction circonférentielle vers l'extérieur, et
- **qu'**un anneau de support annulaire (5) est formé d'un seul tenant dans le support (2) et est orienté transversalement vers l'axe central (3),
- **qu'**une plaque de pression (15) est fermement connectée à une plaque de refroidissement (9) de telle sorte qu'un coussin en mousse élastiquement déformable (14), la carte de condensateurs (11), l'anneau de support (5) et les cartes de transistors (7) soient pressés ensemble entre la plaque de pression (15) et la plaque de refroidissement (9).

7. Onduleur selon la revendication 6,
**caractérisé en ce que** les bornes de batterie (13) font saillie vers l'extérieur à travers une ouverture de l'anneau de support annulaire (5).

8. Onduleur selon la revendication 6 ou 7,
**caractérisé en ce que** les cartes de transistors (7) sont fixées sur l'anneau de support annulaire (5), orientées à l'opposé de la carte de condensateurs (11) et circulant autour de l'axe central (3) de manière distribuée et serrée.

9. Onduleur selon la revendication 8,
**caractérisé en ce**
- **que**, dans l'anneau de support(5) du support (2), sont coulées de multiples broches de contact (24), qui sont orientées axialement depuis les cartes de transistors (7) vers la carte de circuit de commande (16) et circulent autour de la carte de condensateurs (11), et
- **que** la carte de transistors respective (7) est mise en contact électriquement avec la broche de contact correspondante (24) par le biais d'un fil électroconducteur (25), qui est lié par fil à la carte de transistors respective (7) et à la broche de contact respective (24), et
- **que** chaque broche de contact respective (24) vers la carte de circuit de commande (16) présente une partie épaissie côté extrémité (26) et la carte de circuit de commande (16), pour la partie épaissie respective (26), comprend un ouverture de réception (27), et
- **que** la partie épaissie respective (26) s'engage dans l'ouverture de réception respective (27) et, grâce à cela, la broche de contact respective (24) est fixée par serrage dans la carte de circuit de commande (16) et est en contact électrique avec la carte de circuit de commande (16).

10. Onduleur selon l'une quelconque des revendications 6 à 9,
caractérisé en
- que, sur l'anneau de support (5) du support (2) sont formées de multiples fentes axiales, dans chacune desquelles est reçue une barre omnibus de contact (18), et
- que la barre omnibus de contact respective (18) est comprimée entre la carte de transistors respective (7) et la carte de condensateurs (11), et à cause de ceci, les cartes de transistors (7) sont mises en contact électriquement avec la carte de condensateur (11).

11. Onduleur selon l'une quelconque des revendications 1 à 10,
**caractérisé en ce**
- **que** l'onduleur (1) comprend une plaque de refroidissement annulaire (9) à travers laquelle peut s'écouler un liquide de refroidissement, qui repose contre les cartes de transistors (7) d'une manière à transfert de chaleur, et
- **que** les condensateurs (12) de la carte de condensateurs (11) sont guidés axialement entre les cartes de transistors (7) et à travers une ouverture de la plaque de refroidissement annulaire (9) et reposent contre la plaque de refroidissement (9) radialement et d'une manière à transfert de chaleur, et
- **que** les bornes de batterie (13) entre les cartes de transistors (7) et entre les condensateurs (12) font saillie par l'ouverture de la plaque de refroidissement annulaire (9) axialement vers l'extérieur.

12. Moteur électrique (32),
- dans lequel le moteur électrique (32) comprend un rotor (33) qui peut tourner autour d'un arbre rotatif (43) et un stator (34), qui interagissent électromagnétiquement l'un avec l'autre,
- dans lequel le stator (34) comprend de multiples bobines de stator (38), dans lequel au moins certaines des bobines de stator (38), par le biais de leurs fils de bobine (37), sont directement mises en contact électriquement avec trois phases électriques, et
- dans lequel le moteur électrique (32), pour la phase respective, comprend au moins une borne de phase électroconductrice (35), qui est connectée de manière électroconductrice au fil de bobine associé (37),
**caractérisé en ce**
**que** le moteur électrique (32) comprend l'onduleur (1) selon l'une quelconque des revendications précédentes, qui est fixé au stator (34) faisant face aux bornes de phase (35), dans lequel les bornes de phase (35) viennent en prise dans l'onduleur (1) et sont mises en contact électriquement avec les cartes de transistors (7).

13. Moteur selon la revendication 12,
**caractérisé en ce**
- **que** la borne de phase respective (35) se situe radialement à l'extérieur du fil de bobine associé (37) et, à cause de ceci, le fil de bobine associé (37) vient en prise radialement dans la borne de phase respective (35), et
- **qu'**entre les bornes de phase respectives (35) et le stator (34) est agencé un support déformable élastiquement (40) et les bornes de phase respectives (35) sont pressées contre le stator (34) au moyen d'un anneau de pression (39) et sont ainsi fixées au stator (34).
